# EUROPEAN PATENT SPECIFICATION

(11) **EP 1 713 940 B1**
(45) Date of publication and mention of the grant of the patent: **15.12.2010**
(21) Application number: 05710830.0
(22) Date of filing: 26.01.2005
(51) Int. Cl.: C21B 13/00

(54) **METHOD FOR MANUFACTURING MOLTEN IRONS**
VERFAHREN ZUR HERSTELLUNG VON ROHEISEN
METHODE DE FABRICATION DE FER LIQUIDE

(30) Priority: 26.01.2004 KR 20040004738
(43) Date of publication of application: 25.10.2006
(60) Divisional application: 08022411.6
(73) Proprietor: Posco, Pohang-shi, Kyungsangbuk-do 790-300 (KR)
(72) Inventor: KANG, Chang-Oh, Pohang-shi, Kyungsangbuk-do 790-300 (KR); PARK, Geun Dong, Pohang-shi, Kyungsangbuk-do 790-360 (KR); LEE, Hoo Geun, Pohang-shi, Kyungsangbuk-do 790-360 (KR); BAE, Jin Chan, Pohang-shi, Kyungsangbuk-do 790-360 (KR); AHN, Ho Sik, Pohang-shi, Kyungsangbuk-do 790-360 (KR); HEO, Nam Hwan, Pohang-shi, Kyungsangbuk-do 790-360 (KR); SON, Chang Il, Pohang-shi, Kyungsangbuk-do 790-360 (KR); RYOU, Jin Ho, Pohang-shi, Kyungsangbuk-do 790-360 (KR)
(74) Representative: Winter, Brandl, Fürniss, Hübner, Röss, Kaiser, Polte - Partnerschaft
(86) International application number: PCT/KR2005/000218
(87) International publication number: WO 2005/071119

(56) References cited:
- EP-A- 1 142 978
- WO-A-02/50219
- DE-A1- 2 407 780
- KR-A- 19980 052 528
- KR-A- 20040 057 213
- US-B1- 6 332 911
- US-B1- 6 332 911
- BRATEK K ET AL: "Properties and structure of different rank anthracites" FUEL, IPC SCIENCE AND TECHNOLOGY PRESS, GUILDFORD, GB, vol. 81, no. 1, January 2002 (2002-01), pages 97-108, XP004323564 ISSN: 0016-2361
- S.J. MANGENA ET AL: "THE AMENABILITY OF SOME WITBANK BITUMINOUS ULTRAFINE COALS TO BINDERLESS BRIQUETTING" FUEL PROCESSING TECHNOLOGY, no. 85, 2004, pages 1647-1662, XP002455760
- M. KURKOVA ETAL: "COMPOSITION OF BITUMINOUS COAL IN DEPENDENCE ON ENVIRONMENT AND TEMPERATURE OF ALTERATION" BULLETIN OF THE CZECH GEOLOGICAL SURVEY, vol. 78, no. 1, 2003, pages 23-33, XP002455761
- J.T. MCCARTNEY AND M. TEICHMÜLLER: "Classification of coals according to degree of coalification by reflectance of the vitrinite component" FUEL, vol. January, no. 51, 31 January 1972 (1972-01-31), pages 64-68, Piitsburg, USA

## Description

### BACKGROUND OF THE INVENTION

### (a) Field of the Invention

The present invention relates to a method for manufacturing molten irons.

### (b) Description of the Related Art

The iron and steel industry is a core industry that supplies the basic materials needed in construction and in the manufacture of automobiles, ships, home appliances, and many of the other products we use. It is also an industry with one of the longest histories that has progressed together with humanity. In an iron foundry, which plays a pivotal roll in the iron and steel industry, after molten iron (i.e., pig iron in a molten state) is produced using iron ore and coal as raw materials, steel is produced from the molten iron and is then supplied to customers.

Approximately 60% of the world's iron production is realized using the blast furnace method developed in the 14th century. In the blast furnace method, cokes produced using bituminous coals as raw materials, and iron ores that have undergone a sintering process are charged into a blast furnace, and oxygen gas is supplied to the furnace to reduce the iron ore, thereby manufacturing molten iron. The blast furnace method, which is a main aspect of molten iron production, requires raw materials having a predetermined hardness and a grain size that can ensure permeability in the furnace. As a carbon source used as fuel and a reducing agent, cokes made from specific raw coal are used, and as an iron source, sintered ores which have undergone a successive compacting process have been used. Accordingly, in the modern blast furnace method, it is necessary to include raw material pre-processing equipment such as cokes manufacturing equipment and sintering equipment to process iron ores, and not only it is necessary to obtain accessory equipments in addition to the blast furnace, but equipment to prevent and minimize the generation of pollution in the accessory equipments are needed. The amount of investment, therefore, is considerable and ultimately increasing manufacturing costs. In order to solve these problems of the blast furnace method, much research is being conducted into producing molten irons by directly using raw coals as fuels and a reducing agent, and also directly using iron ores as iron sources.

U.S. Patent Nos. 4,409,023 and 5,534,046 both disclose an apparatus and method for producing liquid molten pig iron using lump iron sources. The apparatus for producing molten iron is realized using a melter-gasifier that is connected to a packed bed-type reactor or a fluidized bed-type reactor. Reduced irons emitted from the packed bed-type reactor for the fluidized bed-type reactor are charged into the melter-gasifier to be melted, after which it is converted into molten iron and slag then discharged. Coals are supplied to the melter-gasifier to form a coal-packed bed, and oxygen is supplied through a tuyere of a lower area of the coal-packed bed to burn the coals. Combustion gas is converted into a hot reduced gas while rising through the coal-packed bed. The hot reduced gas is exhausted to outside the melter-gasifer and is supplied as reduced gas to the packed bed-type reactor or fluidized bed-type reactor.

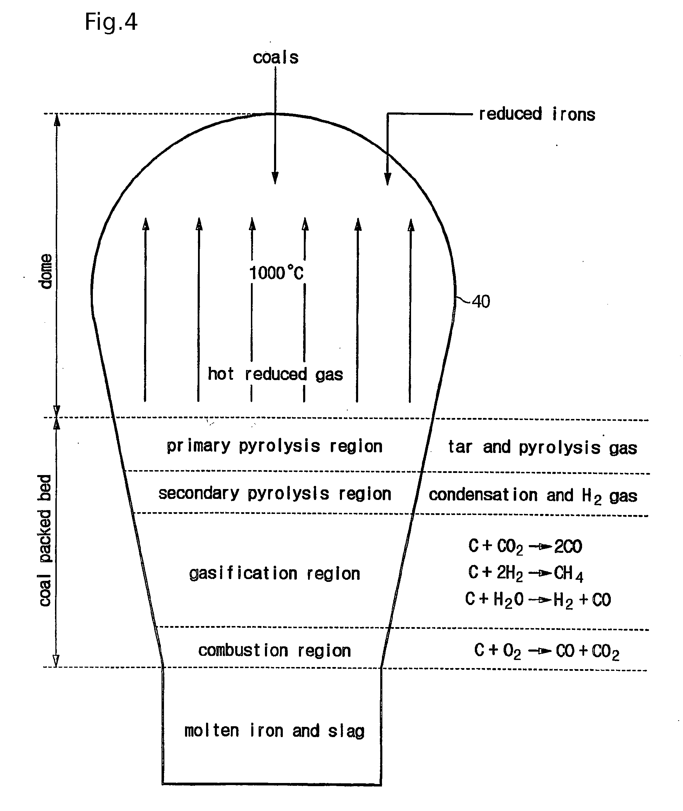

FIG. 4 is a schematic view showing performance of the above melter-gasifier. As shown in FIG. 4, a melter-gasifier 40 to which coals and reduced iron are supplied mainly includes a dome on an upper area thereof, and a coal-packed bed in a lower area thereof.

The coals in room temperature supplied to inside the melter-gasifier 40 directly contact a hot gas flow of approximately 1000 °C in the dome so as to be quickly heated, then descends to an upper surface of the coal-packed bed. While moving toward a lower area of the coal-packed bed, the coal passes through a primary pyrolysis region, a secondary pyrolysis region, a gasification region, and a combustion region to be converted into a hot reduced gas. In the primary pyrolysis region, tar and pyrolysis gas are generated, and in the secondary pyrolysis region, char is condensed and H₂ gas is generated.

Further, in the gasification region, chemical reactions occur as indicated by the chemical formulae of FIG. 4. Also, reduced irons supplied to the melter-gasifier 40 are melted to form melted pig iron, and a reaction occurs in which ash comprised in the coal and gangue comprised in the reduced iron are converted to slags. Heat used in the melting and slag reactions is supplied by heat exchange between reduced irons and coals, and by hot combustion gas generated through the burning of coals in the combustion region due to the chemical reaction indicated by the chemical formula.

In order for satisfactory performance in such a melter-gasifier, it is important to form a coal-packed bed that maintains a suitable permeability. To realize this, it is necessary to control the grain size of the coals to within a specific range.

U.S. Patent Nos. 4,409,023 and 5,534,046 disclose limitation of the grain size of coals in the melter-gasifier to between 8mm and 35mm. However, coals used to manufacture iron supplied from various countries of origin include significant quantities of fine coals with grain sizes of less than 8mm. Therefore, prior to charge into the melter-gasifier, it is necessary to select and remove these coals, resulting in a loss of a substantial amount of the raw coals. Also, this places an undue limitation on the grain size of the raw coals.

To overcome these problems, U.S. Patent No. 6,332,911 discloses a method that uses fine coals in a melter-gasifier. In this method, among raw material coals having the same composition and properties, lump coals having a grain size of 8mm or more are directly charged into the melter-gasifier, and fine coals with a grain size of less than 8mm are charged into the melter-gasifier after bitumen is added as a binder to be formed into coal briquettes of a predetermined size or greater.

With the use of this method, the raw materials of the same composition and properties are used after undergoing sorting according to a grain size. As a result, the performance in the melter-gasifier during the manufacture of molten iron is affected by the raw coals such that much care must be taken in selecting the raw coals, that is, selection of the raw coals is limited. In addition, in the case of coal briquettes used in the melter-gasifier, many conditions must be satisfied in addition to the condition of grain size to maintain a suitable permeability. These include the satisfaction of the conditions of compressive strength, hot strength, hot differentiation rate, ash amount, and amount of fixed carbon. When using raw coals having the same composition and properties, it is difficult to satisfy all these conditions.

Furthermore, with the use of the costly bitumen as a binder, unit costs associated with the coal briquettes are increased, ultimately increasing the cost to manufacture molten iron. Also, adjusting the amount of ash is difficult such that SiO gas is generated in the hot combustion region formed in a lower area of the coal-packed bed in the melter-gasifier by the SiO₂ component comprised in the coals. The SiO gas is mixed into the molten iron, which is melted while being reduced in the gasification region in the coal-packed bed, to thereby increase the amount of Si contained in the molten iron to thereby reduce the quality of the molten iron.

### SUMMARY OF THE INVENTION

The present invention relates to a method for manufacturing molten irons using a method for manufacturing coal briquettes of a good quality.

The method for manufacturing coal briquettes used in manufacturing molten irons includes a step of performing an initial grain size selection of a first coal group to prepare fine coals; a step of mixing a second coal group having a mean reflectance (Rm) of 0.8 or higher into the fine coals; a step of drying mixed coals comprising the fine coals of the first coal group and the second coal group, and performing a secondary grain size selection to the mixed coals; a step of adding a hardening agent to the mixed coals and mixing the hardening agent and the mixed coals; a step of adding a molasses binder to the mixed coals and mixing the molasses binder and the mixed coals; and a step of manufacturing coal briquettes by molding the mixed coals.

In the step of mixing a second coal group into the fine coals, the second coal group is mixed to 15-80wt% of the mixed coals.

In the step of adding a hardening agent, it is preferable that one or more hardening agents are selected from the group consisting of quicklime, slaked lime, limestone, calcium carbonate, cement, bentonite, clay, silica, silicate, dolomite, phosphoric acid, sulfuric acid, and an oxide.

It is more preferable that the hardening agent is slaked lime.

In the step of adding a hardening agent, the hardening agent may be quicklime and the quicklime may be converted to a slake lime according to the chemical formula below.

CaO + H_{2O} → Ca(OH)₂

In the step of adding a hardening agent, the hardening agent may be quicklime, and the quicklime and the molasses binder may form calcium saccharate bond.

In the step of adding a hardening agent, the hardening agent may be added by an amount of 1-5 parts by weight of 100 parts by weight of the mixed coals that have been dried and undergone grain size selection; and in the step of adding the molasses binder, the molasses binder may be added by an amount of 5-15 parts by weight.

In the step of drying the mixed coals and performing a secondary grain size selection to the mixed coals, the water contents of the mixed coals are preferably controlled to be 4-10wt% of the mixed coals.

In the step of manufacturing coal briquettes, the coal briquettes preferably have 20-40% volatile matter contents, 20% or less coal ash contents and 45-70% fixed carbon contents on a dry basis.

In the step of manufacturing coal briquettes, the coal briquettes preferably contain 50% or less SiO₂

In the step of manufacturing coal briquettes, the coal briquettes may have 80% or more coal briquettes of 10mm or greater in a cold strength evaluation method. The cold strength evaluation method is performed by allowing 2kg of a sample ore to undergo a free fall from a height of 5m onto a steel plate four times and measuring the grain size of the remaining coal briquettes.

In the step of manufacturing coal briquettes, the coal briquettes may have 60% or more char with a grain size of 15mm or greater in a hot strength evaluation method. The hot strength evaluation method is performed by passing nitrogen gas in a reactor furnace set at 1000°C to obtain char in an inert atmosphere, and measuring the grain size of the char.

Manufacturing molten irons according to the present invention relates to a method for manufacturing molten irons in which a coal-packed bed is formed by using coals and reduced irons that have undergone preliminary reduction is charged into the coal-packed bed. The method for manufacturing molten irons includes a step of performing an initial grain size selection of a first coal group to prepare fine coals; a step of mixing a second coal group having a mean reflectance (Rm) of 0.8 or higher into the fine coals; a step of drying mixed coals comprising the fine coals of the first coal group and the second coal group, and performing a secondary grain size selection to the mixed coals; a step of adding a hardening agent to the mixed coals and mixing the hardening agent and the mixed coals; a step of adding a molasses binder to the mixed coals and mixing the molasses binder and the mixed coals; a step of manufacturing coal briquettes by molding the mixed coals; a step of forming a coal-packed bed using lump coals that have been separated during the initial grain size selection and the coal briquettes, and charging reduced irons for mixing into the coal-packed bed; and a step of supplying oxygen to the coal-packed bed to burn coals in the coal-packed bed, and manufacturing molten irons by melting reduced irons using the heat of combustion.

In the step of mixing a second coal group into the fine coals, the second coal group is mixed to 15-80wt% of the mixed coals.

The step of drying the mixed coals and performing a secondary grain size selection to the mixed coals may include a step of drying the mixed coals, and a step of crushing the mixed coals with a grain diameter exceeding 4mm among the dried mixed coals such that a grain diameter of the mixed coals become 4mm or less are selected.

In the step of adding a hardening agent, one or more hardening agents are selected from the group consisting of quicklime, slaked lime, limestone, calcium carbonate, cement, bentonite, clay, silica, silicate, dolomite, phosphoric acid, sulfuric acid, and an oxide.

In the step of adding a hardening agent, the hardening agent may be added by an amount of 1-5 parts by weight of 100 parts by weight of the mixed coals that have been dried and undergone grain size selection. Also, in the step of adding the molasses binder, the molasses binder may be added by an amount of 5-15 parts by weight.

In the step of adding molasses binder, the molasses binder with a solid content of 70-85wt% may be added.

In the step of manufacturing coal briquettes, the coal briquettes preferably have 20-40% volatile matter contents, 20% or less coal ash contents and 45-70% fixed carbon contents on a dry basis.

In the step of manufacturing coal briquettes, the coal briquettes preferably contain 50% or less SiO₂.

In the step of manufacturing coal briquettes, the volume of the coal briquette is preferably 10-50cm³.

In the step of manufacturing coal briquettes, the coal briquettes preferably have 80% or more coal briquettes of 10mm or greater in cold strength evaluation method. The cold strength evaluation method is performed by allowing 2kg of a sample ore to undergo a free fall from a height of 5m onto a steel plate four times and measuring the grain size of the remaining coal briquettes.

In the step of manufacturing coal briquettes, the coal briquettes preferably have 60% or more char with a grain size of 15mm or greater in a hot strength evaluation method. The hot strength evaluation method is performed by passing nitrogen gas in a reactor furnace set at 1000°C to obtain char in an inert atmosphere, and measuring the grain size of the char.

In the step of forming the coal-packed bed, the coal briquettes are preferably in the range of 20-80wt% of coals used to form the coal-packed bed.

In the step of manufacturing molten irons, the amount of dissolved Si content in the molten irons is preferably 1wt% or less.

A step of recycling fine coals generated during manufacturing the coal briquettes, and mixing the fine coals and the mixed coals can be further included.

In the step of manufacturing molten irons, reduced irons manufactured by performing preliminary reduction of lump iron ores and additives may be charged. Otherwise, iron ores of a small size and additives may be preliminary reduced and hot compacted, and then reduced irons may be charged.

The present invention uses an apparatus for manufacturing molten irons in which coals and reduced irons that have undergone preliminary reduction are charged into a melter-gasifier to manufacture molten irons. The apparatus for manufacturing molten irons includes a grain size selector for performing an initial grain size selection of a first coal group; a coal storage bin for supplying a second coal group having a mean reflectance of 0.8 or greater, the coal storage bin performing this operation separately from the grain size selector; a pretreating unit connected to the grain size selector and the coal storage bin, and drying and performing a secondary selection while mixing the fine coals of the first coal group and the second coal group; at least one mixer connected to the pretreating unit, and taking a molasses binder and a hardening agent for mixing with the mixed coals in which the fine coals of a first coal group and the second coal group are mixed; a roll press connected to the mixer for molding the mixed coals; and a melter-gasifier connected to the grain size selector and the roll press, and charged with lump coals separated from the grain size selector, the coal briquettes molded in the roll press, and the reduced irons, and manufacturing molten irons while being supplied with oxygen.

The apparatus for manufacturing molten irons may also include a binder bin for supplying molasses binder; and a hardening agent bin for supplying one or more hardening agents selected from the group consisting of quicklime, slaked lime, limestone, calcium carbonate, cement, bentonite, clay, silica, silicate, dolomite, phosphoric acid, sulfuric acid, and an oxide. The binder bin and the hardening agent bin are preferably connected to the mixer.

The pretreating unit may comprise a drier connected to the grain size selector and the coal storage bin, and drying the mixed coals in which the fine coals of a first coal group and the second coal group are mixed; another grain size selector for selecting coals having a grain diameter of 4mm or less from the drier, and transporting the coals to the mixer; and a crusher for crushing coals having a grain diameter that exceeds 4mm that have undergone grain size selection.

The mixer preferably includes a kneader for kneading the mixed coals and the molasses binder.

The apparatus for manufacturing molten irons of the present invention may also include a recycling assembly connected to the roll press and the mixer, and collecting fine coals generated during manufacturing coal briquettes, and supplying the fine coals to the mixer.

The apparatus for manufacturing molten irons of the present invention may also include coal briquette storage bin connected to the roll press, for temporarily storing the coal briquettes molded in the roll press.

### BRIEF DESCRIPTION OF THE DRAWINGS

FIG. 1 is a schematic view of an apparatus for manufacturing molten irons according to a first embodiment of the present invention.
FIG. 2 is a schematic view of an apparatus for manufacturing molten irons according to a second embodiment of the present invention.
FIG. 3 is a schematic view of a testing apparatus used for measuring hot strength in experimental examples of the present invention.
FIG. 4 is a schematic view showing performance of a melter-gasifier during manufacture of molten irons.

### DETAILED DESCRIPTION OF THE PREFERRED EMBODIMENTS

Embodiments of the present invention will now be described in detail with reference to the accompanying drawings. The embodiments illustrate the present invention and are not meant to be restrictive.

The present invention provides a method of manufacturing molten irons using coals with a wide distribution of a grain size. In order to ensure permeability and prevent scattering in the melter-gasifier, an apparatus for manufacturing molten irons controls grain size of coals supplied to a melter-gasifier to at least a predetermined size. That is, in the apparatus and method for manufacturing molten irons of the present invention, lump coals that exceed a predetermined size are directly charged into the melter-gasifier and coal briquettes manufactured by compacting fine coals with equal or less than predetermined size are charged into the melter-gasifier to form a coal-packed bed. In addition, in the apparatus and method for manufacturing molten irons of the present invention, during manufacturing coal briquettes, coals for controlling quality are mixed with fine coals and then mixed coals are molded into coal briquettes to thereby ensure a predetermined hot strength and cold strength. Accordingly, performance of the melter-gasifier is improved and molten irons of a good quality are produced.

If coals for controlling quality are mixed with fine coals in this manner, the quality of molten irons may be improved by controlling various variables. In particular, molten irons having a good quality can be manufactured by controlling a reflectance of the coal for controlling quality, a mixing ratio of the coals for controlling quality and fine coals, and a ratio of lump coals and coal briquettes.

Especially, coal briquettes supplied through a coal supply assembly included in an apparatus for manufacturing molten irons must satisfy the following conditions during mixing the coals for controlling quality so that molten irons having the desired properties may be manufactured.
(1) Grain size of coal must be limited to within a suitable range.
   By satisfying this condition, hot combustion gas generated in a combustion region is uniformly distributed in a coal-packed bed in a melter-gasifier such that heat efficiency between the hot combustion gas and reduced irons and coals may be increased. Further, since a permeability of the coal-packed bed may be suitably maintained, molten pig irons and slags may uniformly flow downward within the coal-packed bed.
(2) Suitable level of cold strength of coal briquettes must be ensured.
   By satisfying this condition, loss caused by the generation of powder during the process of transporting and storing coal briquettes supplied to a melter-gasifier may be minimized.
(3) Suitable level of hot differentiation rate must be ensured.
   In the case where coal briquettes are charged into a melter-gasifier, fine particles are generated by the hot differentiation rate resulting from quick heating in a dome of the melter-gasifier. These fine particles ensure a predetermined hot differentiation rate to thereby minimize the amount of scattering loss to outside the melter-gasifier caused by a hot gas flow formed in the dome. (4) Suitable level of hot strength of coal briquettes must be ensured.
   By satisfying this condition, a load of charged materials applied to an upper area of a coal-packed bed and pressure of combustion gas from a lower area in a region where gasification of a coal-packed bed in the melter-gasifier occurs may be endured.
(5) There must be included suitable amount or less of coal ashes in raw coals.
   By satisfying this condition, an amount of slags produced by a slag reaction between coals in a region where gasification occurs and gangue components in reduced irons are maintained at a predetermined level or less.
(6) Suitable level of fixed carbons must be ensured.
   By satisfying this condition, it is possible to prevent the shortage amount of carbons that are heated and supplied from a region where gasification occurs to a region where combustion occurs.
   In the present invention, condition (1) is satisfied through a grain size selection process, condition (2) is satisfied by mixing a suitable binder with coals, and conditions (3) through (6) are satisfied by suitably using a coal for controlling quality. If coals for controlling quality are not separately used for mixing, and lump coals and coal briquettes as coals are only supplied to a melter-gasifier, it is difficult to satisfy conditions (3) through (6).

An apparatus and method for manufacturing molten iron of the present invention for satisfying the above conditions with respect to the properties of coal briquettes will be described below in greater detail.

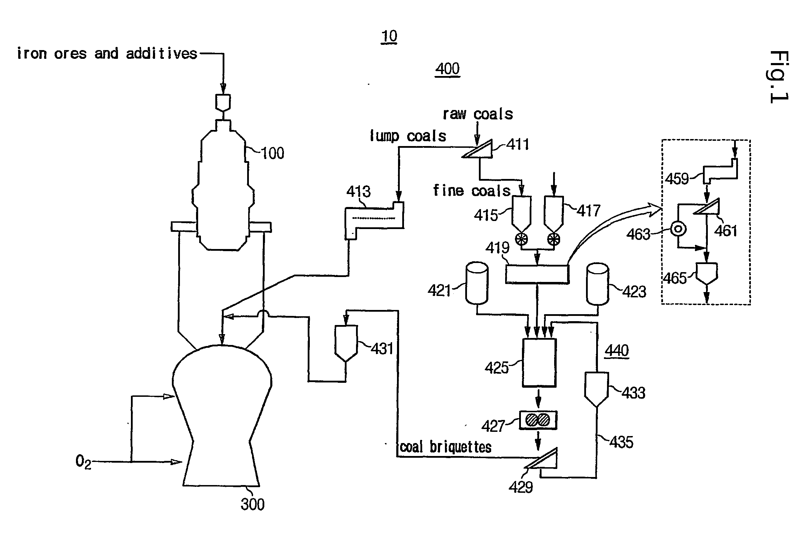

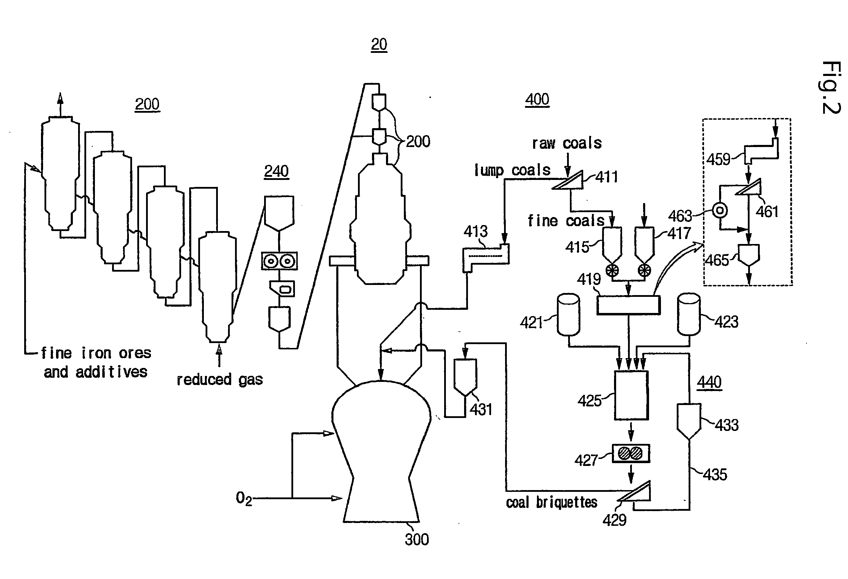

FIGs. 1 and 2 is schematic views of apparatus for manufacturing molten iron respectively according to first and second embodiments of the present invention. FIG. 1 shows an apparatus for manufacturing molten irons 10 using a packed bed-type reactor 100, and FIG. 2 shows an apparatus for manufacturing molten irons 20 using a fluidized bed-type reactor 200. Each of the apparatus 10 and 20 includes a coal supply assembly 400 having the same structure, and coals are supplied to a melter-gasifier 300 through the coal supply assembly 400 to form a coal-packed bed.

In the apparatus for manufacturing molten irons 10 according to a first embodiment of the present invention as shown in FIG. 1, lump iron ores and additives are mixed and undergone preliminary reduction in the packed bed-type reactor 100 to manufacture reduced irons. Next, reduced irons are charged into the coal packed bed in the melter-gasifier 300, thereby manufacturing molten irons. The coal packed bed is made of the coals supplied from the coal supply assembly 400.

In the apparatus for manufacturing molten iron 20 according to a second embodiment of the present invention as shown in FIG. 2, iron ores with a small grain size and additives are mixed to undergo preliminary reduction in the fluidized bed-type reactor 200. Next, hot compacted reduced irons are supplied from a hot compacting assembly 220 connected to the fluidized bed-type reactor 200 to a coal-packed bed, which is formed with coals supplied from the coal supply assembly 400. Then, molten irons are manufactured in the melter-gasifier 300. The hot compacted materials are supplied to the melter-gasifier 300 through a hot intermediate vessel assembly 240 such that it is possible to maintain supply amount suitably.

The coal supply assembly 400 common to both the apparatuses for manufacturing molten irons 10 and 20 according to the first and second embodiments of the present invention, respectively will be described below.

The apparatuses for manufacturing molten irons according to the first and second embodiments of the present invention includes a grain size selector 411 for performing an initial grain size selection of a first coal group; a coal storage bin 417 for supplying a second coal group having a mean reflectance of 0.8 or greater as coals for controlling quality, the coal storage bin 417 performing this operation separately from the grain size selector 411; a pretreating unit 419 connected to the grain size selector 411 and the coal storage bin 417, and drying and performing a secondary selection while mixing the fine coals of the first coal group and the second coal group; at least one mixer 425 connected to the pretreating unit 419 and taking a molasses binder and a hardening agent for mixing with the mixed coals in which the fine coals of a first coal group and the second coal group are mixed; a roll press 427 connected to the mixer 425 for molding the mixed coals; and a melter-gasifier 300 connected to the grain size selector 411 and the roll press 427. The lump coals separated from the grain size selector 411, the coal briquettes molded in the roll press 427, and the reduced irons are charged into the melter-gasifier 300. Then, molten irons are manufactured in the melter-gasifier 300 while being supplied with oxygen. The above apparatuses are included in the coal supply assembly 400. Molten irons and slags are manufactured in the melter-gasifier 300. The first coal group and the second coal group are not mixed using another process, but are freely mixed through the process in order. For example, the second coal group can be dumped on a conveyor belt while transporting the first coal group using a conveyor belt, thereby both the first coal group and the second coal group can be mixed together.

Further, the apparatuses for manufacturing molten irons according to the first and second embodiments of the present invention comprise a binder bin 423 for supplying molasses binder for binding coals; and a hardening agent bin 421 for supplying one or more hardening agents selected from the group consisting of quicklime, slaked lime, limestone, calcium carbonate, cement, bentonite, clay, silica, silicate, dolomite, phosphoric acid, sulfuric acid, and an oxide. The hardening agent bin 421 is separated from the binder bin 423. The binder bin 423 and the hardening agent bin 421 are connected to the mixer 425.

The mixer 425 may include an additional mixer for separately mixing the molasses binder and the hardening agent, and may include a kneader for kneading them together.

The pretreating unit 419, as shown in the enlarged rectangle of FIG. 1, includes a drier 459 connected to the grain size selector 411 and the coal storage bin 417, and drying the mixed coals in which the fine coals of a first coal group and the second coal group are mixed; another grain size selector 461 for selecting coals having a grain diameter of 4mm or less from the drier 459; and a crusher 463 for crushing coals having a grain diameter that exceeds 4mm that have undergone grain size selection. The pretreating unit 419 may further include a mixed coal storage bin 465 for selectively and temporarily storing coals with a grain diameter of 4mm or less. This may be applied to not only the first embodiment of the present invention, but also to the second embodiment of the present invention as shown in FIG. 2.

Among the raw coals, lump coals with a grain diameter that exceeds 8mm incapable of passing through the grain size selector 411 passes through a lump coal drying assembly 413 to be dried, then is charged directly into the melter-gasifier 300. Lump coals are dried in the lump coal drying assembly 413, thereby controlling moisture contents in the lump coals to be 4wt% or less. On the other hand, fine coals of a first coal group that pass through the grain size selector 411 are stored in a fine coal storage bin 415, then are mixed with the second coal group for controlling quality stored in coal storage bin 417 and molded to be coal briquettes. The coal briquettes are then temporarily stored in a coal briquette bin 431 and are supplied to the melter-gasifier 300.

The apparatuses according to the first and second embodiments of the present invention further include a recycling assembly 440 that is connected to the roll press 427, and that collects fine coals generated during manufacturing coal briquettes and supplies the same to the mixer 425. The recycling assembly 440 includes a fine coal selector 429, a fine coal storage bin 433, and a recycling pipe 435. In addition, the recycling assembly 440 may include additional devices required to perform recycling. The recycling assembly 440 supplies fine coals selected in the fine coal selector 429 to the fine coal storage bin 433 for temporarily storing in the same through the recycling pipe 435, then supplies the fine coals to the mixer 425 therethrough.

Molten irons are manufactured through each of the following step using the apparatuses for manufacturing molten irons according to the first and second embodiments of the present invention.

The method for manufacturing coal briquettes includes a step of performing an initial grain size selection of a first coal group as raw coals to prepare fine coals; a step of mixing a second coal group having a mean reflectance (Rm) of 0.8 or higher into the fine coals; a step of drying mixed coals comprising the fine coals of the first coal group and the second coal group, and a step of performing a secondary grain size selection to the mixed coals; a step of adding a hardening agent to the mixed coals and mixing the hardening agent and the mixed coals; a step of adding a molasses binder to the mixed coals and mixing the molasses binder and the mixed coals; and a step of manufacturing coal briquettes by molding the mixed coals.

The method for manufacturing molten irons includes a step of forming a coal-packed bed using lump coals that have been separated during the initial grain size selection and the coal briquettes, and charging reduced irons for mixing into the coal-packed bed; and a step of supplying oxygen to the coal-packed bed to burn coals in the coal-packed bed, and a step of manufacturing molten irons by melting reduced irons using the heat of combustion. The step of adding a molasses binder to the mixed coals may comprise a kneading process to mix them more uniformly.

The coal group refers to an aggregate of coal in which at least one or more types of coal are mixed. The 8mm grain diameter standard of the initial grain size selection is used to distinguish between lump coals and fine coals. Since it is preferable that lump coals with a grain diameter exceeding 8mm should be used and separated from the fine coals of 8mm or less in the packed bed-type reactor for manufacturing molten irons, the above standard is applied to perform grain size selection. The above standard is merely an example of the present invention and the present invention is not limited thereto. Therefore, it is possible to perform grain size selection using another standard.

Further, coals with a mean reflectance (Rm) of 0.8 or higher are mixed with fine coals. In analyzing coal structure, in case of calculating a content ratio of constituent structural components and minute structural components using a microscope, the reflectance is indicated by the amplitude or energy of the reflected light, and the amplitude or energy of the incident light when light is directed onto the surface of a material object. The mean reflectance of the coal that is used is determined by measuring a maximum reflectance of the minute structural components using a microscope and light with a wavelength of 546nm. Coal may be evaluated by the reflectance of vitrinite, which is a main component of coal, and the mean reflectance is proportional to hot strength. Therefore, the higher the mean reflectance, the greater the hot strength of coal briquettes such that performance of the coal briquettes in the melter-gasifier is made more favorable.

In the case where the mean reflectance (Rm) of coal for controlling quality is less than 0.8, the coal for controlling quality is quickly turned to differentiate such that not only its hot strength is low, but it is unable to sufficiently operate as a heat source. Accordingly, it is preferable that the mean reflectance of the coal for controlling quality should be 0.8 or greater. Coking coal is an example of coal for controlling quality. In the case of coal, the mean reflectance typically does not surpass 3.0.

When mixing a second coal group as coals for controlling quality into fine coals in the present invention, the second coal group is added until their amounts are 15-80wt% of the mixed coals. If the coals for controlling quality are less than 15wt% of the mixed coals, it becomes difficult to improve the characteristics of the fine raw coals. Further, if the coals for controlling quality exceed 80wt% of the mixed coals, there is only a minimal increase in the properties of the coal briquettes in high temperature relative to the increase in the raw material costs of the coal briquettes.

In the present invention, molasses binder and a hardening agent may be added and mixed. Preferably, with respect to mixed coals of 100 parts by weight that have been dried and have undergone grain size selection, the hardening agent is 1-5 parts by weight and the molasses binder is 5-15 parts by weight.

If quicklime (CaO), which is one of hardening agent, is mixed with the mixed coals, residual water in the mixed coals reacts with the quicklime (CaO) to be converted into calcium hydroxide [Ca(OH)₂] through the chemical reaction shown by Chemical Formula 1 below to thereby removing water by a strong calorification reaction. A subsequent molding process is favorably realized by removing water content, and a predetermined strength is ensured.

[Chemical Formula 1] CaO + H₂O → Ca(OH)₂

If water is removed in this manner and molasses binder is used as a binder, the quicklime and molasses binder improve the strength of coal briquettes by the chemical reaction of calcium saccharate bond, and melting of the molasses binder in the water is prevented.

In the present invention, it is preferable that a hardening agent be added by an amount of 1-5 parts by weight with respect to 100 parts by weight of the mixed coals. If the amount of hardening agent is less than 1 part by weight, water may not be sufficiently removed such that good calcium saccharate bond between the molasses binder and the hardening agent is unable to be realized, resulting in a reduction in the strength of the coal briquettes. In addition, if the hardening agent exceeds 5 parts by weight, the properties of the coal briquettes deteriorate.

It is preferable that molasses binder be added by an amount of 5-15 parts by weight. If the amount of added molasses binder is less than 5 parts by weight, the strength of the coal briquettes is reduced due to the insufficient amount of molasses binder in the fine coals. Also, if the amount of added molasses binder is greater than 15 parts by weight, adhesion and other such problems occur during mixing with fine coals. In the case of molasses binder, it is preferable that the amount of solid content is 70-85wt%. If the amount of solid content is less than 70wt%, the content of sugar, which exhibits binding property, is low and the water content is high such that the strength of the coal briquettes is reduced. Also, if the amount of solid content exceeds 85wt%, the viscosity of the binder is increased such that it is difficult to realize uniform mixing.

In the above, although a molasses binder is added, the present invention is not limited in this respect and it possible to realize mixing other binders and other additives that improve the properties of other binders and coal briquettes.

Further, in the present invention, a step of drying the mixed coals and performing secondary grain size selection may comprise a step of drying the mixed coals, and a step of crushing mixed coals with a grain diameter that exceeds 4mm in the dried mixed coals such that the grain diameter of the mixed coals becomes 4mm or less. It is preferable that the amount of water in the mixed coals become 4-10wt% of the total in consideration of the mixing amount with the hardening agent. If the amount of water in the mixed coals is less than 4%, there is an insufficient reaction between the mixed coals and hardening agent such that the strength of ultimately manufactured coal briquettes is reduced. Further, if the amount of water in the mixed coals exceeds 10wt%, adhesion and cohesion occur in the molding process such that yield and operating efficiency are reduced. In addition, if the grain diameter of the mixed coals exceeds 4mm, the coal briquettes may be broken during molding the same as a result of the large grain diameter. The grain diameterof the coals, therefore, must be controlled to 4mm or less.

The coal briquettes molded by the roll press 427 preferably has 20-40% volatile matter contents, 20% or less coal ash contents, and 45-70% fixed carbon contents on a dry basis. If the amount of volatile matters are less than 20%, the amount of generated gas needed in the reduction of iron ores is minimized such that reduction is not sufficiently realized and fuel costs are increased. If the amount of volatile matters exceeds 40%, the amount of fixed carbons needed in manufacturing molten irons is reduced. Further, if the amount of coal ashes content exceeds 20%, fuel costs increase as a result of the increase in the slag volume. Also, fuel costs increase if the amount of fixed carbon is less than 45%, while if the amount of fixed carbon exceeds 70%, the amount of gas needed for reduction of ore is decreased such that reduction is not sufficiently realized and fuel costs are increased.

Regarding the composition of coal ashes comprised in coal briquettes, it is preferable that the content of SiO₂ should be 50% or less. If the SiO₂ content in the coal ash exceeds 50%, the amount of Si in the molten irons is increased such that the quality of the molten irons is decreased.

Further, it is necessary that the coal briquettes have a sufficient cold strength for transporting and storing, and must have a sufficient hot strength to minimize the generation of fine particles so that permeation rate may be ensured during charging to the melter-gasifier.

With respect to a method for evaluating the cold strength of coal briquettes, 2kg of a sample ore is allowed to undergo a free fall from a height of 5m onto a steel plate. This is performed four times. Next, the amount of remaining coal briquettes with a grain diameter of 10mm or more is determined. It is preferable that the amount of coal briquettes remaining with a 10mm or greater grain diameter is 80% or more. If the amount is less than 80%, an increase in a differentiation rate during transporting and storing coal briquettes causes operating expenses to increase, and makes production unstable as a result of the negative affect on production processes. Also, yield is decreased by the reduction in the temperature of the molten irons in the melter-gasifier.

With respect to a method for evaluating the hot strength of coal briquettes, nitrogen gas is passed through a reaction furnace set at 1000°C, and a grain size of the obtained char in an inert atmosphere is divided into a ratio of a relatively large grain size of 15mm or greater and a ratio of a relatively small grain size of 10mm or less. The greater the large grain size ratio and the less the small grain size ratio, the greater the hot strength of the coal briquettes. It is preferable that the large grain size ratio is 60% or more of the total to ensure a good hot strength of the coal briquettes. If the large grain size ratio of the char in the hot strength evaluation method of coal briquettes is less than 60%, the coal briquettes are insufficiently burned in the melter-gasifier, and are excessively collected in a dust collector to thereby increase manufacturing costs and fuel costs.

There is a difference in the volume of coal briquettes and lump coals when charged into the melter-gasifier. Coal briquettes are manufactured having a uniform volume of 10-50cm³, preferably 20-40cm³. Since the sizes of lump coals obtained in a natural state are smaller than those of coal briquettes, larger coal briquettes is preferred to use in consideration of ventilation. The above range of volume for coal briquettes is an optimal value in order to ensure good ventilation in consideration of the volume of lump coals.

If coal briquettes manufactured in this manner and lump coals with a grain diameter that exceeds 8mm are charged together into the melter-gasifier to form a coal-packed bed, lump coals with their natural components and properties may not be suitable for the component and property standards of the melter-gasifier. Therefore, it is preferable that the amount of coal briquettes used be adjusted according to the components and properties of the lump coals to meet the component and property standards of the melter-gasifier. Accordingly, coal briquettes in an amount of 20-80wt% of the total coal are used for charging to the melter-gasifier. If the amount of coal briquettes is less than 20wt% of the total coals, it is difficult to make improvements in the gas distribution, gasification, combustion reaction, flow of molten irons and slags, and so on. If the amount of the coal briquettes exceeds 80wt%, the amount of lump coals that is used is excessively minimized such that problems occur with respect to effectively managing stocks of raw coals.

Especially, if molten irons are manufactured using only lump coals, the amount of SiO₂ charged is approximately 100kg per ton of coal such that SiO₂ is generated in the hot combustion region formed in a lower area of the coal-packed bed to be mixed in the molten irons that is reduced and melted in the gasification region in the coal-packed bed, thereby increasing the [Si] content in the molten iron. On the contrary, since the amount of coal ashes in the raw material coal may be reduced and controlled when charging coal briquettes, in which coal for controlling quality has been mixed, the charging amount of SiO₂ is reduced to approximately 55kg per 1 ton of coal briquettes to thereby minimize the amount of SiO gas generated. Ultimately, the [Si] content in the molten iron is reduced.

If molten irons are manufactured using the coal briquettes manufactured through the above method, it is preferable that the dissolved Si content in the molten irons is 1wt% or less. If the dissolved Si content in the molten irons is greater than 1wt%, the quality of the molten irons is reduced.

In the following, the present invention is described in greater detail through Experimental Examples. The following Experimental Examples merely illustrate the present invention are not meant to be restrictive.

### Experimental Examples

In the Experimental Examples that follow, the following experiments were performed in an attempt to manufacture molten irons of a good quality by adjusting the reflectance and mixing ratio of the coals for controlling quality, and the amount of coal briquettes used. Experimental Examples of the present invention are described in which the reflectance and mixing ratio of the coals for controlling quality, and the amount of coal briquettes used are varied.

### Reflectance and mixing ratio of coals for controlling quality

In the Experimental Examples of the present invention, various types of coals having different mean reflectance (Rm) were mixed to manufacture coal briquettes, then their hot strength were measured. This is shown in Table 1 below. In order to increase the quality of fine coals, coal groups for controlling quality having a mean reflectance that is higher than that of fine coals were used for mixing with the same.

**[Table 1]**

| Coal Group | Technical Analysis (on dry basis, wt%) | | | mean reflectance (Rm) |
|---|---|---|---|---|
| | Volatile matter | Coal ash | Fixed carbon | |
| A | 16.6 | 8.5 | 74.9 | 1.45 |
| B | 18.0 | 14.1 | 67.9 | 1.27 |
| C | 19.1 | 6.9 | 74.0 | 1.00 |
| D | 34.8 | 6.8 | 58.3 | 0.80 |
| E | 34.4 | 7.4 | 58.2 | 0.71 |
| F | 26.2 | 10.4 | 63.4 | 0.78 |
| G | 34.0 | 9.4 | 56.6 | 0.68 |

In Experimental Examples 1 through 8 of the present invention, after mixing of the A-type coal group through F-type coal group having a grain diameter of 4mm or less, 8 parts by weight of molasses binder as a binder and 3 parts by weight of quicklime as a hardening agent based on 100 parts by weight of the mixed coals were mixed to manufacture coal briquettes of a pillow shape and having the dimensions of 64.5mm x 25.4mm x 19.1 mm using a roll press. The hot strength of the coal briquettes was then measured. Further, for comparison with Experimental Examples 1 through 10, in Comparative Examples 1 through 3, 8 parts by weight of molasses binder as a binder and 3 parts by weight of quicklime as a hardening agent were mixed in one of the E-type coal group and the F-type coal group, which have properties similar to that of fine coals, and coal briquettes were manufactured using a roll press. The hot strength of the coal briquettes was then measured. In the case of the G-type coal group, lump coals were used in place of coal briquettes and their hot strength was measured.

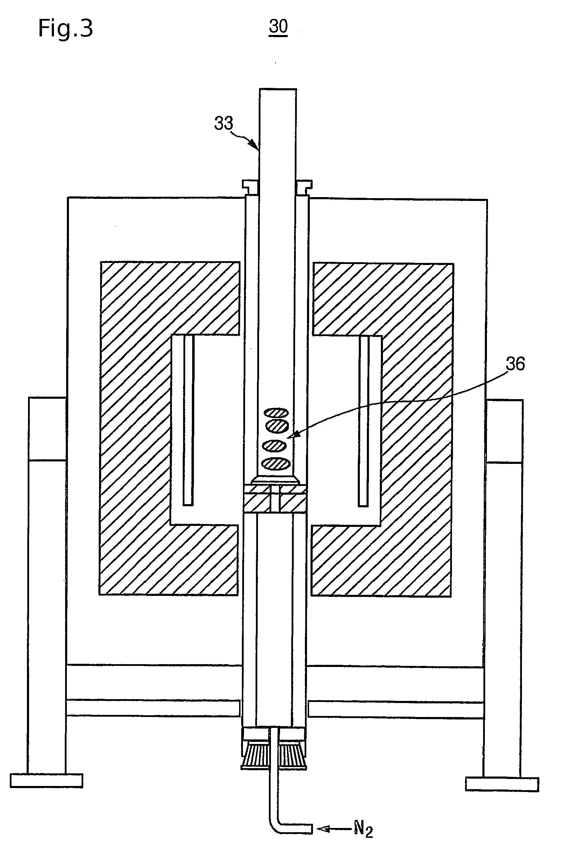

The measurement of hot strength to determine the amount of pyrolysis of the coal briquettes generated in the melter-gasifier was performed using a pyrolysis testing apparatus 30 of FIG. 3. FIG. 3 is a schematic view of a pyrolysis testing apparatus used for measuring a hot strength of coal briquettes of the Experimental Examples of the present invention. The temperature of the pyrolysis testing apparatus 30 was maintained at 1000°C, and nitrogen gas was passed through a lower portion thereof at a rate of 2 liters per minute to maintain an inert atmosphere. Under these conditions, coal briquettes test pieces 36 were supplied into a quartz pipe 33, having a diameter of 60mm, two at a time at 10 minutes intervals. This was repeated four times to test a total of 8 coal briquette test pieces 36. After supplying the coal briquette test pieces 36, a sample ores were extracted and cooled, and variations in grain size distributions were measured using a standard sieve. Since the lower the degree of pyrolysis, the higher the hot strength, the hot strength is determined to be good if there is a significant amount of large char and a minimal amount of small char. In the Experimental Examples of the present invention, the hot strength was determined by examining the distribution of char with a large grain size of 15mm or greater and char with a small grain size of 10mm or less.

### Experimental Example 1

With reference to Table 1, after mixing the E-type coal group at 70wt% and the A-type coal group at 30wt%, 8 parts by weight of molasses binder as a binder and 3 parts by weight of quicklime as a hardening agent were mixed to manufacture coal briquettes. The hot strength of the coal briquettes was then measured.

### Experimental Example 2

With reference to Table 1, except for mixing the E-type coal group at 70wt% and the B-type coal group at 30wt%, all other aspects of Experimental Example 2 were identical to Experimental Example 1.

### Experimental Example 3

With reference to Table 1, except for mixing the E-type coal group at 70wt% and the C-type coal group at 30wt%, all other aspects of

Experimental Example 3 were identical to Experimental Example 1.

### Experimental Example 4

With reference to Table 1, except for mixing the E-type coal group at 50wt% and the C-type coal group at 50wt%, all other aspects of Experimental Example 4 were identical to Experimental Example 1.

### Experimental Example 5

With reference to Table 1, except for mixing the F-type coal group at 20wt% and the B-type coal group at 80wt%, all other aspects of Experimental Example 5 were identical to Experimental Example 1.

### Experimental Example 6

With reference to Table 1, except for mixing the E-type coal group at 80wt% and the D-type coal group at 20wt%, all other aspects of Experimental Example 6 were identical to Experimental Example 1.

### Experimental Example 7

With reference to Table 1, except for mixing the E-type coal group at 85wt% and the D-type coal group at 15wt%, all other aspects of Experimental Example 7 were identical to Experimental Example 1.

### Experimental Example 8

With reference to Table 1, except for mixing the E-type coal group at 50wt% and the F-type coal group at 50wt%, all other aspects of Experimental Example 8 were identical to Experimental Example 1.

### Experimental Example 9

With reference to Table 1, except for mixing the E-type coal group at 10wt% and the A-type coal group at 90wt%, all other aspects of Experimental Example 9 were identical to Experimental Example 1.

### Experimental Example 10

With reference to Table 1, except for mixing the E-type coal group at 10wt% and the B-type coal group at 90wt%, all other aspects of Experimental Example 10 were identical to Experimental Example 1.

### Comparative Example 1

With reference to Table 1, except for using the E-type, coal group at 100wt%, all other aspects of Comparative Example 1 were identical to Experimental Example 1.

### Comparative Example 2

With reference to Table 1, except for using the F-type coal group at 100wt%, all other aspects of Comparative Example 2 were identical to Experimental Example 1.

### Comparative Example 3

Only lump coals were used for all of the G-type coal group, and coal briquettes were not used.

The hot strengths of the coal briquettes manufactured according to the Experimental Examples and the Comparative Examples were measured and appear in Table 2 below.

**[Table 2]**

| | Coal mixing ratio | | Hot strength (Large grain size ratio) | Hot strength (Small grain size ratio) |
|---|---|---|---|---|
| Experimental Example 1 | E/70w% | A/30wt% | 75.0% | 2.2% |
| Experimental Example 2 | E/70w% | B/30wt% | 72.2% | 1.2% |
| Experimental Example 3 | E/70wt% | C/30wt% | 66.8% | 1.2% |
| Experimental Example 4 | E/50wt% | C/50wt% | 65.9% | 2.6% |
| Experimental Example 5 | F/20wt% | B/80wt% | 87.8% | 1.5% |
| Experimental Example 6 | E/80wt% | D/20wt% | 65.1 % | 1.8% |
| Experimental Example 7 | E/85wt% | D/15wt% | 60.7% | 2.9% |
| Experimental Example 8 | E/50wt% | F/50wt% | 54.5% | 2.7% |
| Experimental Example 9 | E/10wt% | A/90wt% | 86.5% | 1.9% |
| Experimental Example 10 | E/10wt% | B/90wt% | 90.9% | 1.4% |
| Comparative Example 1 | E/100wt% | - | 56.5% | 7.2% |
| Comparative Example 2 | F/100wt% | - | 50.1 % | 2.9% |
| Comparative Example 3 | G/100wt% | - | 57.0% | 2.8% |

When lump coals are only used without coal briquettes to manufacture molten irons as in Comparative Example 3, the hot strength is approximately 57.0%. Therefore, the hot strength when manufacturing coal briquettes by mixing coals must be better than that when only using lump coals, thereby ensuring more economical production.

As shown in Table 2, in the case of Experimental Examples 1 through 7, and Experimental Examples 9 and 10, the ratio of char with a grain diameter of 15mm or greater is at least 60%, and the ratio of char with a grain diameter of 10mm or less does not exceed 3% such that hot strength is relatively high. On the other hand, in the case of Experimental Example 8 and Comparative Examples 1 through 3, the ratio of char with a grain diameter of at least 15mm is less than 60%, and the ratio of char with a grain diameter of 10mm or less is at least 2.7%, indicative of a relatively low hot strength.

In addition, as is evident from the Experimental Examples 5, 9, and 10, when there is mixed as coals for controlling quality respectively 80wt% of the B-type coal group, 90wt% of the A-type coal group, and 90wt% of the B-type coal group, there are only slight variations in the hot strength, with the respective hot strength being 87.8%, 86.5%, and 90.9%.

It is evident from the above Experimental Examples that a relatively high hot strength may be obtained if coal briquettes are manufactured by mixing coals of which reflectance is equal to or more than that of the D-type coal group. Accordingly, it is preferable that the mean reflectance of coals for quality control should be at least that of the D-type coal group, 0.8. It is more preferable that the mean reflectance of coals for quality control should be the B-type coal group, 1.27 in order for the hot strength to be over 70.0wt%

Further, it is evident from Experimental Example 7 that the coals for controlling quality must be added by an amount of at least 15% to obtain coal briquettes having a favorable hot strength.

### Usage Ratio of coal briquettes

In the Experimental Examples of the present invention, when manufacturing coal briquettes of Experimental Examples 2 and 3, the properties of the molten irons according to the amount of coal briquette used were determined through the following experiments.

### Using Coal briquettes of Experimental Example 2

In order to determine the properties of molten iron according to a mixing ratio of coal briquettes and lump coals, the amount of coal briquettes manufactured according to Experimental Example 2 that is used was adjusted to perform the following experiments. Results of the experiments appear in Table 3.

### Experimental Example 2-1

After mixing the E-type coal group at 70wt% and the B-type coal group at 30wt% as in Experimental Example 2, coal briquettes were manufactured by mixing 8 parts by weight of molasses binder as a binder and 3 parts by weight of quicklime as a hardening agent. Coal briquettes were used in 20wt% of the charged coals, and lump coals were used in the remaining 80wt% of the charged coals.

### Experimental Example 2-2

Coal briquettes of Experimental Example 2 were used in 30wt% of the charged coals, and lump coals were used in the remaining 70wt% of the charged coals.

### Experimental Example 2-3

Coal briquettes of Experimental Example 2 were used in 50wt% of the charged coals, and lump coals were used in the remaining 50wt% of the charged coals.

### Comparative Example 4

Only lump coals were supplied to the melter-gasifier, and coal briquettes were not used.

**[Table 3]**

| | | Experimental Example 2-1 | Experimental Example 2-2 | Experimental Example 2-3 | Comparative Example 4 |
|---|---|---|---|---|---|
| Coal briquette usage ratio (wt%) | | 20 | 30 | 50 | 0 |
| Fuel cost (t/h) | | 1037 | 1031 | 1019 | 1055 |
| Melter-gasifier pressure difference (kg/cm²) | Wind pressure | 4.4 | 4.3 | 4.0 | 4.5 |
| | Pressure loss | 2.02 | 1.82 | 1.75 | 2.03 |
| Molten iron temperature (°C) | | 1503 | 1520 | 1520 | 1493 |
| [Si] in molten iron (%) | | 0.72 | 0.60 | 0.50 | 1.13 |

As shown in Table 3, as the amount of coal briquettes used is increased from 20wt%, the wind pressure and pressure loss in the melter-gasifer is stabilized such that gas distribution becomes uniform and ventilation is improved. This is due to the fact that, as coal briquettes are used, the grain size of the charged coals becomes uniform, and the char particles become stable at high temperature. Accordingly, there is an increase in the efficiency of heat exchange between gas rising from a lower area of the melter-gasifier and reduced irons descending from an upper area of the melter-gasifier. This results in an increase in the yield speed of molten irons and a reduction in fuel costs.

### Using Coal briquettes of Experimental Example 3

In order to determine the properties of molten irons according to the mixing ratio of coal briquettes and lump coals, the amount of coal briquettes manufactured according to Experimental Example 3 that is used was varied and the following experiments were performed. Results of the experiments appear in Table 4 below.

### Experimental Example 3-1

After mixing the E-type coal group at 70wt% and the C-type coal group at 30wt% as in Experimental Example 3, coal briquettes were manufactured by mixing 8 parts by weight of molasses binder as a binder and 3 parts by weight of quicklime as a hardening agent. Coal briquettes are used as 20wt% of the charged coal amount, and lump coals are used as the remaining 80wt% of the charged coal amount. A small amount of cokes was then supplied to maintain stable operating conditions of the melter-gasifier.

### Experimental Example 3-2

Coal briquettes of Experimental Example 3 were used in 40% of the charged coal amount, and lump coals were used the remaining 60wt% of the charged coal amount. A small amount of coke was then supplied to maintain stable operating conditions of the melter-gasifier.

### Experimental Example 3-3

Coal briquettes of Experimental Example 3 were used in 50% of the charged coal amount, and lump coals were used in the remaining 50wt% of the charged coal amount.

### Comparative Example 5

Only lump coals were supplied to the melter-gasifier, and coal briquettes were not used. A small amount of coke was then supplied to maintain stable operating conditions of the melter-gasifier.

**[Table 4]**

| | | | Experimental Example 3-1 | Experimental Example 3-2 | Experimental Example 3-3 | Comparative Example 5 |
|---|---|---|---|---|---|---|
| Coal briquettes usage ratio (wt%) | | | 20 | 40 | 50 | 0 |
| Melter-gasifier | Cokes usage ratio | | 10 | 8 | 0 | 12 |
| | Molten iron temperat ure (°C) | Average | 1498 | 1503 | 1507 | 1497 |
| | | Deviation | 6.9 | 5.7 | 4.4 | 12.9 |
| | [Si] in molten iron (%) | Average | 0.92 | 0.90 | 0.59 | 1.15 |
| | | Deviation | 0.12 | 0.11 | 0.10 | 0.15 |

As is evident from the results shown in Table 4, as the amount of coal briquettes used is increased from 20wt%, the deviation in the temperature of the molten irons gradually decreases. Further, when coal briquettes were used in 50% of the charged coals as in Experimental Example 3-3, the [Si] amount in the molten iron is significantly decreased to 0.59%, and as the amount of coal briquettes used is increased, the temperature of molten irons and concentration of [Si] in molten iron are significantly reduced.

In addition, with increases in the amount of coal briquettes that were used, the gas flow distribution is made to be uniform by the increase in permeability of the coal-packed bed, and the strength of the coal briquette char is increased to significantly improve a fluid permeability in a lower area of the coal-packed bed. Therefore, the amount of cokes used is gradually decreased such that when 50wt% of coal briquettes are used as in Experimental Example 3-3, stable operation was able to be maintained even without using cokes.

On the other hand, when coal briquettes were not used and only lump coals were used as in Comparative Example 5, the gas flow distribution in the coal-packed bed becomes uniform, and the fluid permeability therein is improved. To control the gasification reaction, it was necessary to use less reactive cokes of a high strength in an amount of approximately 12 parts by weight.

In the present invention described above, coal briquettes using coals with a large distribution of grain sizes are suitable for the manufacture of molten irons, as long as coals for controlling quality with a mean reflectance of 0.8 and higher are used.

In addition, by controlling to predetermined amounts the mean reflectance of coals for controlling quality, the mixing ratio of molasses binder and a hardening agent, the mixing ratio of fine coals and coals for controlling quality, and the amount of coal briquettes used, various conditions such as hot differentiation rate, hot strength, coal ash amount, and fixed carbon amount in the melter-gasifer required for manufacturing molten irons may be satisfied.

Furthermore, the apparatus for manufacturing molten irons of the present invention uses a pretreating unit to repeat drying and grain size selection such that the final quality of the coal briquettes is improved.

The apparatus for manufacturing molten irons of the present invention separately uses binder bin to enable the amount of molasses binder supplied to be suitably controlled, thereby making process much easier.

Also, in the apparatus for manufacturing molten irons of the present invention, the mixer may include a kneader such that the mixed coals and the molasses binder are bonded well, thereby improving the ultimate quality of the coal briquettes.

The apparatus for manufacturing molten irons of the present invention also includes a coal briquette storage bin for temporarily storing the manufactured coal briquettes. As a result, the amount of coal briquettes charged into the melter-gasifier may be flexibly controlled depending on the production conditions.

Although embodiments of the present invention have been described in detail hereinabove in connection with certain exemplary embodiments, it should be understood that the invention is not limited to the disclosed exemplary embodiments, but, on the contrary is intended to cover various modifications and/or equivalent arrangements included within the spirit and scope of the present invention, as defined in the appended claims.

## Claims

1. A method for manufacturing molten irons in which a coal-packed bed is formed by using coals and reduced irons that have undergone preliminary reduction is charged into the coal-packed bed, the method comprising the steps of:
performing an initial grain size selection of a first coal group to prepare fine coals;
mixing a second coal group having a mean reflectance (Rm) of 0.8 or higher into the fine coals, wherein the second coal group is mixed to 15-80wt% of the mixed coals;
drying mixed coals comprising the fine coals of the first coal group and the second coal group, and performing a secondary grain size selection to the mixed coals;
adding a hardening agent to the mixed coals and mixing the hardening agent and the mixed coals;
adding a molasses binder to the mixed coals and mixing the molasses binder and the mixed coals;
manufacturing coal briquettes by molding the mixed coals;
forming a coal-packed bed using lump coals that have been separated during the initial grain size selection and the coal briquettes, and charging reduced irons for mixing into the coal-packed bed; and
supplying oxygen to the coal-packed bed to burn coals in the coal-packed bed, and manufacturing molten irons by melting reduced irons using the heat of combustion.

2. The method of claim 1, wherein in the step of drying the mixed coals and performing a secondary grain size selection to the mixed coals comprising steps of:
drying the mixed coals, and
crushing the mixed coals with a grain diameter exceeding 4mm among the dried mixed coals such that a grain diameter of the mixed coals become 4mm or less are selected.

3. The method of claim 1, wherein in the step of adding a hardening agent, one or more hardening agents are selected from the group consisting of quicklime, slaked lime, limestone, calcium carbonate, cement, bentonite, clay, silica, silicate, dolomite, phosphoric acid, sulfuric acid, and an oxide.

4. The method of claim 1, wherein in the step of adding a hardening agent, the hardening agent is added by an amount of 1-5 parts by weight of 100 parts by weight of the mixed coals that have been dried and undergone grain size selection; and
wherein in the step of adding the molasses binder, the molasses binder is added by an amount of 5-15 parts by weight.

5. The method of claim 1, wherein in the step of adding molasses binder, molasses binder with a solid content of 70-85wt% is added.

6. The method of claim 1, wherein in the step of manufacturing coal briquettes, the coal briquettes have 20-40% volatile matter contents, 20% or less coal ash contents and 45-70% fixed carbon contents on a dry basis.

7. The method of claim 6, wherein in the step of manufacturing coal briquettes, the coal briquettes contain 50% or less SiO₂.

8. The method of claim 1, wherein in the step of manufacturing coal briquettes, the volume of the coal briquette is 10-50cm³.

9. The method of claim 1, wherein in the step of manufacturing coal briquettes, the coal briquettes have 80% or more coal briquettes of 10mm or greater in cold strength evaluation method,
where the cold strength evaluation method is performed by allowing 2kg of a sample ore to undergo a free fall from a height of 5m onto a steel plate four times and measuring the grain size of the remaining coal briquettes.

10. The method of claim 1, wherein in the step of manufacturing coal briquettes, the coal briquettes have 60% or more char with a grain size of 15mm or greater in a hot strength evaluation method,
where the hot strength evaluation method is performed by passing nitrogen gas in a reactor furnace set at 1000°C to obtain char in an inert atmosphere, and measuring the grain size of the char.

11. The method of claim 1, wherein in the step of forming the coal-packed bed, the coal briquettes are in the range of 20-80wt% of coals used to form the coal-packed bed.

12. The method of claim 1, wherein in the step of manufacturing molten irons, the amount of dissolved Si content in the molten irons is 1wt% or less.

13. The method of claim 1, further comprising a step of recycling fine coals generated during manufacturing the coal briquettes, and mixing the fine coals and the mixed coals.

14. The method of claim 1, wherein in the step of manufacturing molten irons, reduced irons manufactured by performing preliminary reduction of lump iron ores and additives are charged.

15. The method of claim 1, wherein in the step of manufacturing molten irons, iron ores of a small size and additives are preliminary reduced and hot compacted, and then reduced irons are charged.

## Patentansprüche

1. Verfahren zur Herstellung von Roheisen, bei dem ein Kohleschüttungsbett gebildet wird durch Verwendung von Kohle und reduziertes Eisen, das vorheriger Reduktion unterworfen wurde und in das Kohleschüttungsbett geladen wird, wobei das Verfahren die folgenden Schritte aufweist:
Man führt eine Auswahl der ursprünglichen Korngröße einer ersten Kohlengruppe zur Herstellung von Staubkohle durch;
man mischt eine zweite Kohlengruppe mit einem mittleren Reflektionsgrad (Rm) von 0.8 oder größer in die Staubkohle, wobei die zweite Kohlengruppe zu 15 bis 80 Gew.-% der gemischten Kohle gemischt wird;
man trocknet gemischte Kohle, die die Staubkohle der erste Kohlengruppe und die zweite Kohlengruppe enthält und führt eine zweite Korngrößenauswahl mit der gemischten Kohle durch;
man setzt der gemischten Kohle ein Härtungsmittel zu und mischt das Härtungsmittel und die gemischte Kohle;
man setzt der gemischten Kohle ein Melasse-Bindemittel zu und mischt das Melasse-Bindemittel und die gemischte Kohle;
man stellt Kohlebriketts durch Formung der gemischten Kohle her;
man bildet ein Kohleschüttungsbett unter Verwendung von Stückkohle, die während der ursprünglichen Korngrößenauswahl abgetrennt wurde, und den Kohlebriketts her und füllt reduziertes Eisen zum Mischen in das Kohleschüttungsbett;
man leitet Sauerstoff in die Kohleschüttung zur Verbrennung von Kohle in der Kohleschüttungsbett und zur Erzeugung von Roheisen durch Schmelzen des reduzierten Eisens unter Ausnutzen der Verbrennungswärme.

2. Verfahren nach Anspruch 1, worin der Schritt des Trocknens der gemischten Kohle und der Durchführung einer zweiten Korngrößenauswahl mit der gemischten Kohle die folgenden Schritte ausweist:
Trocknen der gemischten Kohle und
Zerkleinern der gemischten Kohle mit einem Korndurchmesser über 4 mm von der getrockneten gemischten Kohle so, dass ein Korndurchmesser der gemischten Kohle von 4 mm oder kleiner, ausgewählt wird.

3. Verfahren nach Anspruch 1, wobei beim Schritt des Zusetzens eines Härtungsmittels ein oder mehrere Härtungsmittel aus der Gruppe bestehend aus Branntkalk, gelöschter Kalk, Kalkstein, Calciumcarbonat, Zement, Bentonit, Ton, Silica, Silicat, Dolomit, Phosphorsäure, Schwefelsäure und einem Oxid gewählt wird (werden).

4. Verfahren nach Anspruch 1, wobei beim Schritt der Zugabe eines Härtungsmittels das Härtungsmittel in einer Menge von 1,5 Gewichtsteilen auf 100 Gewichtsteile der gemischten Kohle, die getrocknet wurde und einer Korngrößenzahl unterworfen wurde, zugesetzt wird; und
wobei beim Schritt der Zugabe des Melasse-Bindemittels das Melasse-Bindemittel in einer Menge von 5 bis 15 Gewichtsteilen zugesetzt wird.

5. Verfahren nach Anspruch 1, wobei beim Schritt der Zugabe von Melasse-Bindemittel Melasse-Bindemittel mit einem Feststoffgehalt von 70 bis 85 Gew.-% zugegeben wird.

6. Verfahren nach Anspruch 1, wobei beim Schritt der Herstellung von Kohlebriketts die Kohlebriketts einen Gehalt von 20 bis 40 % flüchtige Stoffe, 20 % oder weniger Kohlenasche und 45 bis 70 % fixer Kohlenstoff auf Trockenbasis enthält.

7. Verfahren nach Anspruch 6, wobei beim Schritt der Herstellung von Kohlebriketts die Kohlebriketts 50 % oder weniger SiO₂ enthalten.

8. Verfahren nach Anspruch 1, wobei im Schritt der Herstellung von Kohlebriketts das Volumen der Kohlebriketts 10 bis 50 cm³ ist.

9. Verfahren nach Anspruch 1, wobei beim Schritt der Herstellung von Kohlebriketts die Kohlebriketts 80 % oder mehr Kohlebriketts von 10 mm oder größer bei der Kaltfestigkeitsbewertungsmethode besitzen,
wobei die Kaltfestigkeitsbewertungsmethode ausgeführt wird, indem man 2 kg einer Probe im freien Fall aus 5 m Höhe viermal auf eine Stahlplatte fallen lässt und die Korngröße der zurückbleibenden Kohlebriketts misst.

10. Verfahren nach Anspruch 1, wobei beim Schritt der Herstellung von Kohlebriketts die Kohlebriketts 60 % oder mehr Halbkoks mit einer Korngröße von 15 mm oder größer bei einer Heißfestigkeitsbewertungsmethode besitzen,
wobei die Heißfestigkeitsbewertungsmethode ausgeführt wird durch Aufgabe von Stickstoffgas in einen auf 1000°C festgelegten Reaktorofen zur Erzielung von Halbkoks in einer inerten Atmosphäre, und Messen der Korngröße des Halbkokses.

11. Verfahren nach Anspruch 1, wobei bei dem Schritt der Bildung der Kohleschüttung die Kohlebriketts im Bereich von 20 bis 80 Gew.-% der Kohle, die zur Bildung der Kohleschüttung verwendet wird, liegen.

12. Verfahren nach Anspruch 1, wobei beim Schritt der Herstellung von Roheisen die Menge des gelösten Si-Gehalts im Roheisen 1 Gew.-% oder weniger ist.

13. Verfahren nach Anspruch 1, weiterhin enthaltend einen Schritt der Rückführung von Staubkohle, die während der Herstellung der Kohlebriketts erzeugt wurde, und Mischen der Staubkohle und der gemischten Kohle.

14. Verfahren nach Anspruch 1, wobei beim Schritt der Herstellung von Roheisen reduziertes Eisen, das durch Durchführung einer vorherigen Reduzierung von stückigem Eisenerz erzeugt wurde, und Zusätze aufgegeben werden.

15. Verfahren nach Anspruch 1, wobei beim Schritt der Herstellung von Roheisen kleinteiliges Eisenerz und Zusätze vorher reduziert und heiß kompaktiert werden und dann reduziertes Eisen aufgegeben wird.

## Revendications

1. Procédé de production de fer fondu, dans lequel un lit de charbon granulaire est formé en utilisant des charbons et du fer réduit qui a subi une réduction préliminaire est chargé dans le lit de charbon granulaire, le procédé comprenant les étapes consistant à :
réaliser une sélection initiale de taille de grains d'un premier groupe de charbon pour préparer des fines de charbon ;
mélanger un deuxième groupe de charbon ayant un facteur de réflexion moyen (Rm) de 0,8 ou supérieur dans les fines de charbon, le deuxième groupe de charbon étant mélangé à 15 à 80 % des charbons mélangés ;
sécher les charbons mélangés comprenant les fines de charbon du premier groupe de charbon et du deuxième groupe de charbon, et réaliser une sélection secondaire de taille de grains dans les charbons mélangés ;
ajouter un agent durcissant aux charbons mélangés et mélanger l'agent durcissant et les charbons mélangés ;
ajouter un liant de mélasse aux charbons mélangés et mélanger le liant de mélasse et les charbons mélangés ;
produire des briquettes de charbon par moulage des charbons mélangés ;
former un lit de charbon granulaire en utilisant des charbons en roche qui ont été séparés durant la sélection initiale de taille des grains et les briquettes de charbon, et charger du fer réduit dans le lit de charbon granulaire ; et
apporter de l'oxygène au lit de charbon granulaire pour brûler le charbon dans le lit de charbon granulaire et produire du fer fondu par fusion de fer réduit en utilisant la chaleur de la combustion.

2. Procédé selon la revendication 1, dans lequel l'étape de séchage des charbons mélangés et de réalisation d'une sélection secondaire de taille de grains des charbons mélangés comprend les étapes consistant à :
sécher les charbons mélangés, et
concasser les charbons mélangés présentant un diamètre de grains supérieur à 4 mm parmi les charbons mélangés séchés de sorte qu'un diamètre de grains des charbons mélangés soit de 4 mm ou inférieur.

3. Procédé selon la revendication 1, dans lequel, à l'étape d'addition d'un agent durcissant, un ou plusieurs agents durcissants sont choisis dans le groupe comprenant la chaux vive, la chaux hydratée, la pierre à chaux, le carbonate de calcium, le ciment, la bentonite, l'argile, la silice, le silicate, la dolomite, l'acide phosphorique, l'acide sulfurique et un oxyde.

4. Procédé selon la revendication 1, dans lequel à l'étape d'addition d'un agent durcissant, l'agent durcissant est ajouté en une quantité de 1 à 5 parties en poids sur 100 parties en poids des charbons mélangés qui ont été séchés et ont subi une sélection de taille de grains ; et
dans lequel à l'étape d'addition du liant de mélasse, le liant de mélasse est ajouté en une quantité de 5 à 15 parties en poids.

5. Procédé selon la revendication 1, dans lequel à l'étape d'addition du liant de mélasse, un liant de mélasse présentant une teneur en solides de 70 à 85 % en poids est ajouté.

6. Procédé selon la revendication 1, dans lequel, à l'étape de production de briquettes de charbon, les briquettes de charbon ont des teneurs en matière volatiles de 20 à 40 %, des teneurs en cendres de charbon de 20 % ou inférieures et des teneurs en carbone fixé de 45 à 70 % sur une base sèche.

7. Procédé selon la revendication 6, dans lequel à l'étape de production de briquettes de charbon, les briquettes de charbon contiennent 50 % ou moins de SiO₂.

8. Procédé selon la revendication 1, dans lequel, à l'étape de production de briquettes de charbon, le volume de la briquette de charbon est de 10 à 50 cm³.

9. Procédé selon la revendication 1, dans lequel à l'étape de production des briquettes de charbon, les briquettes de charbon ont 80 % ou plus de briquettes de charbon de 10 mm ou plus dans un procédé d'évaluation de la résistance à froid,
le procédé d'évaluation de la résistance à froid étant réalisé en soumettant un échantillon de minerai de 2 kg à une chute libre d'une hauteur de 5 m sur une plaque d'acier à quatre reprises et en mesurant la taille des grains des briquettes de charbon restantes.

10. Procédé selon la revendication 1, dans lequel à l'étape de production des briquettes de charbon, les briquettes de charbon présentent 60 % ou plus de résidus de carbonisation présentant une taille de grains de 15 mm ou supérieure dans un procédé d'évaluation de la résistance à chaud,
le procédé d'évaluation de la résistance à chaud étant réalisé en faisant passer un gaz d'azote dans un four réacteur réglé à 1 000° C pour obtenir des résidus de carbonisation dans une atmosphère inerte et en mesurant la taille de grains des résidus de carbonisation.

11. Procédé selon la revendication 1, dans lequel, à l'étape de réalisation du lit de charbon granulaire, les briquettes de charbon présentent de l'ordre de 20 à 80 % en poids de charbon utilisé pour former le lit de charbon granulaire.

12. Procédé selon la revendication 1, dans lequel à l'étape de production de fer fondu, la quantité de Si dissous dans le fer fondu est de 1 % en poids ou inférieure.

13. Procédé selon la revendication 1, comprenant en outre une étape de recyclage des fines de charbon générées durant la production des briquettes de charbon et de mélange des fines de charbon et des charbons mélangés.

14. Procédé selon la revendication 1, dans lequel à l'étape de production du fer fondu, le fer réduit produit en effectuant une réduction préliminaire des minerais de charbon en roche et des additifs est chargé.

15. Procédé selon la revendication 1, dans lequel à l'étape de production du fer fondu, du minerai de fer de petite taille et des additifs sont tout d'abord réduits et compactés à chaud puis du fer réduit est chargé.
